# EUROPEAN PATENT APPLICATION

(11) **EP 4 226 990 A1**
(43) Date of publication of application: **16.08.2023**
(21) Application number: 22020044.8
(22) Date of filing: 09.02.2022
(51) Int. Cl.: B01D 53/14, C10K 1/00

(54) **METHOD AND APPARATUS FOR SEPARATING SULFUR CONTAINING COMPONENTS FROM A BLEED STREAM IN A PROCESS PLANT**

(71) Applicant: L'Air Liquide, Société Anonyme pour l'Etude et l'Exploitation des Procédés Georges Claude, 75007 Paris (FR)
(72) Inventor: Schmidt, Sophia, D-60439 Frankfurt am Main (DE); Corbet, Sharon, D-60439 Frankfurt am Main (DE); Vidovic, Branislav, D-60439 Frankfurt am Main (DE)
(74) Representative: Dropsch, Holger

(57) **Abstract**

An apparatus (100) for separating sulfur containing components from a bleed stream in a process plant, is provided. The apparatus (100) comprises (i) a stripping column (112) that is configured to (a) receive the bleed stream and a stripping gas, wherein the bleed stream comprises methanol, hydrogen cyanide (HCN), ammonia (NH₃), and sulfur containing components; (b) separate the sulfur containing components from the bleed stream by stripping the sulfur containing components when the stripping gas contacts with the bleed stream, and forming a stripped-out gas stream comprising the sulfur containing components and a liquid stream comprising the methanol, HCN, and NH₃; and (c) provide the stripped-out gas stream to the reflux vessel (104) for later sulfur recovery; and (ii) a vaporizer (114) that is configured to receive the liquid stream as a bottom product from the stripping column (112) and vaporize the liquid stream to form a vaporized stream.

## Description

### TECHNICAL FIELD

The present disclosure relates generally to an apparatus and a process for purifying crude synthesis gas; specifically, the present disclosure relates to an apparatus and a method for separating sulfur containing components from a bleed stream in a process plant. More specifically, the present disclosure relates to an apparatus and a method for separating sulfur containing components from a bleed stream in a process plant configured to perform gas cleaning of a crude gas stream, preferably a crude synthesis gas stream, by gas absorption using a selective solvent or absorbent, preferably methanol, wherein the process plant comprises an absorption section and a regeneration section and wherein the bleed stream is obtained in the regeneration section of the process plant.

### BACKGROUND

Typically, gas cleaning processes based on gas absorption by selective solvents or absorbents, e. g. the Rectisol process, are used to purify crude synthesis gas by absorbing disruptive components namely carbon dioxide (CO₂), hydrogen sulfide (H₂S), carbonyl sulfide (COS) and hydrogen cyanide (HCN) from the crude synthesis gas, using methanol as an absorbent. The purified synthesis gas exits from such an absorption unit, e. g. a Rectisol unit, which comprises an absorption section and a regeneration section. The methanol laden with the disruptive components is processed in one or more regeneration units within the regeneration section in order to limit loss of the methanol and separate acid gases from the laden methanol. The regeneration units often comprise a hot regeneration unit which uses heat to desorb disruptive components from the laden methanol, thus obtaining a lean methanol stream which may be recycled to the absorption section, and an overhead stream comprising the disruptive components. Laid-open international patent application WO 2019/081064 A1 discloses details of a hot regeneration unit in a Rectisol plant and the downstream overhead system of the hot regenerator.

During such processes, HCN, and ammonia (NH₃) may accumulate inside the Rectisol unit which may impair components of the Rectisol unit.

Conventionally, in such a scenario, the entire Rectisol plant is shut down periodically to remove the accumulation of HCN and NH₃. In some existing approaches, a bleed stream has been drawn off in order to lower the HCN and NH₃ concentration and has been routed to a flare system. However, the bleed stream contains solvent methanol and sulfur containing components along with nitrogen containing components like HCN and NH₃. The sulfur containing components and the nitrogen containing components may cause contamination to the environment.

Therefore, there is a need to address aforementioned technical drawbacks in existing known technologies in separating sulfur containing components from the bleed stream in a process plant.

### SUMMARY

The present disclosure seeks to provide an improved approach for a designated use or application of a bleed stream that is withdrawn from a process plant. An aim of the present disclosure is to provide a solution that overcomes at least partially the problems encountered in prior art and provide an apparatus and method for separating sulfur containing components from the bleed stream in the process plant, thereby increasing sulfur recovery and avoiding contamination to the environment due to the sulfur containing components in the bleed stream. The object of the present disclosure is achieved by the solutions provided in the enclosed independent claims. Advantageous implementations of the present disclosure are further defined in the enclosed dependent claims.

According to a first aspect, the present disclosure provides an apparatus for separating sulfur containing components from a bleed stream in a process plant, wherein the apparatus comprises:
a stripping column that is configured to
   receive the bleed stream and a stripping gas, wherein the bleed stream is received from a reflux vessel of a hot regenerator overhead system, wherein the bleed stream comprises methanol, hydrogen cyanide (HCN), ammonia (NH₃), and sulfur containing components;
   separate the sulfur containing components from the bleed stream by stripping the sulfur containing components when the stripping gas contacts with the bleed stream, and forming a stripped-out gas stream and a liquid stream, wherein the stripped-out gas stream comprises the sulfur containing components and the stripping gas and the liquid stream comprises the methanol, HCN, and NH₃; and
   provide the stripped-out gas stream to the reflux vessel for later sulfur recovery; and
a vaporizer that is configured to receive the liquid stream as a bottom product from the stripping column and vaporize the liquid stream to form a vaporized stream.

The apparatus for separating sulfur containing components from the bleed stream in the process plant according to present disclosure is of advantage in that sulfur recovery is increased by stripping the sulfur containing components using the stripping gas while routing the liquid stream comprising the methanol, HCN, and NH₃ to the vaporizer. A downstream sulfur processing unit, e. g. operating according to the Claus process, can thus operate more efficiently. Further, the apparatus routes the vaporized stream depleted with the sulfur containing components instead of directly routing the withdrawn bleed stream to a flare system. In such a way, sulfur contamination to the environment is avoided and safe disposal of the withdrawn bleed stream is enabled.

According to a second aspect, the present disclosure provides a method for separating sulfur containing components from a bleed stream in a process plant, wherein the method comprises:
providing the bleed stream comprising hydrogen cyanide (HCN), ammonia (NH₃), methanol, and sulfur containing components into a stripping column, wherein the bleed stream is received from a reflux vessel of a hot regenerator overhead system;
providing a stripping gas into the stripping column;
separating the sulfur containing components from the bleed stream by stripping the sulfur containing components when the stripping gas contacts the bleed stream, and forming a stripped-out gas stream and a liquid stream, wherein the stripped-out gas stream comprises the sulfur containing components and the stripping gas and the liquid stream comprises the methanol, HCN, and NH₃; and
providing the stripped-out gas stream to the reflux vessel for later sulfur recovery; and
providing the liquid stream as a bottom product to a vaporizer to vaporize the liquid stream.

The method for separating sulfur containing components from the bleed stream in the process plant according to present disclosure is of advantage in that sulfur recovery is increased by stripping the sulfur containing components using the stripping gas while routing the liquid stream comprising the methanol, HCN, and NH₃ to the vaporizer. A downstream sulfur processing unit, e. g. operating according to the Claus process, can thus operate more efficiently. Further, the method enables routing the vaporized stream depleted with the sulfur containing components instead of directly routing the withdrawn bleed stream to a flare system. In such a way, sulfur contamination to the environment is avoided and safe disposal of the withdrawn bleed stream is enabled.

According to a third aspect, the present disclosure provides a use of the inventive apparatus or of the inventive a method for separating sulfur containing components from a bleed stream in a process plant,
wherein the process plant is a plant for cleaning a gas stream, preferably a crude synthesis gas stream comprising hydrogen (H₂) and carbon monoxide (CO), by absorption with a lean methanol stream as absorbent and wherein the process plant comprises an absorption section and a regeneration section,
wherein a clean synthesis gas stream and an absorbent stream laden with hydrogen cyanide (HCN), ammonia (NH₃), and sulfur containing components is obtained in the absorption section,
wherein at least a part of the absorbent stream laden with hydrogen cyanide (HCN), ammonia (NH₃), and sulfur containing components is routed to the regeneration section and is treated in a hot regenerator comprised in the regeneration section,
whereby a regenerated methanol stream is obtained from the hot regenerator which is at least partially recycled to the absorption section, forming at least a part of the lean methanol stream, and
whereby a hot regenerator overhead stream is obtained from the hot regenerator which comprises hydrogen cyanide (HCN), ammonia (NH₃), and sulfur containing components,
wherein the hot regenerator overhead stream is routed to a hot regenerator overhead system,
wherein the bleed stream is obtained within the hot regenerator overhead system.

The use of the apparatus or of the method for separating sulfur containing components from a bleed stream in a process plant according to present disclosure is of advantage in that sulfur recovery is increased by stripping the sulfur containing components using the stripping gas while routing the liquid stream comprising the methanol, HCN, and NH₃ to the vaporizer. A downstream sulfur processing unit, e. g. operating according to the Claus process, can thus operate more efficiently. Further, the method enables routing the vaporized stream depleted with the sulfur containing components instead of directly routing the withdrawn bleed stream to a flare system. In such a way, sulfur contamination to the environment is avoided and safe disposal of the withdrawn bleed stream is enabled.

Embodiments of the present disclosure eliminate the aforementioned drawbacks in existing known approaches for separating sulfur containing components from the bleed stream in the process plant. The advantage of the embodiments according to the present disclosure in that the embodiments enable to increase sulfur recovery from the bleed stream that is withdrawn from the process plant, thereby avoiding contamination of environment due to the sulfur containing components and enabling safe disposal of the withdrawn bleed stream.

Additional aspects, advantages, features and objects of the present disclosure are made apparent from the drawings and the detailed description of the illustrative embodiments construed in conjunction with the appended claims that follow. It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. To illustrate the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, the same elements have been indicated by identical numbers. Embodiments of the present disclosure will now be described, by way of example only, with reference to the following diagram wherein:

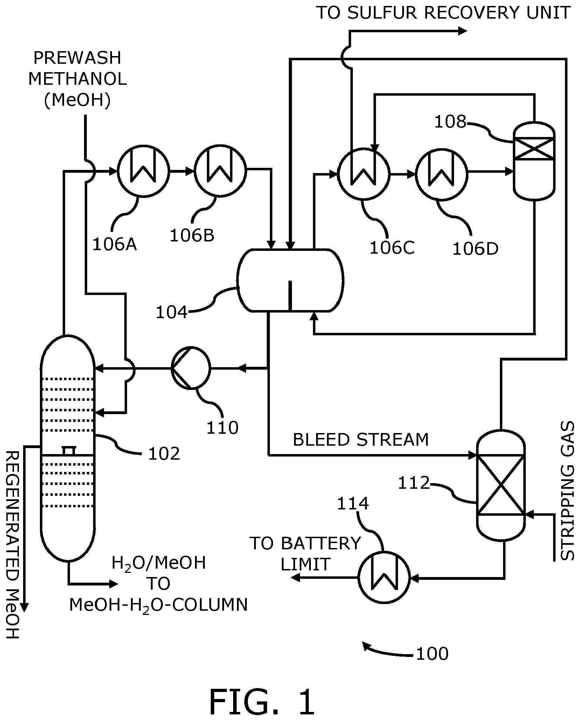

FIG. 1 is a schematic illustration of an apparatus for separating sulfur containing components from a bleed stream in a process plant according to an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

According to a first aspect, the present disclosure provides an apparatus for separating sulfur containing components from a bleed stream in a process plant, wherein the apparatus comprises:
a stripping column that is configured to
   receive the bleed stream and a stripping gas, wherein the bleed stream is received from a reflux vessel of a hot regenerator overhead system, wherein the bleed stream comprises methanol, hydrogen cyanide (HCN), ammonia (NH₃), and sulfur containing components;
   separate the sulfur containing components from the bleed stream by stripping the sulfur containing components when the stripping gas contacts with the bleed stream, and forming a stripped-out gas stream and a liquid stream, wherein the stripped-out gas stream comprises the sulfur containing components and the stripping gas and the liquid stream comprises the methanol, HCN, and NH₃; and
   provide the stripped-out gas stream to the reflux vessel for later sulfur recovery; and
a vaporizer that is configured to receive the liquid stream as a bottom product from the stripping column and vaporize the liquid stream to form a vaporized stream.

The apparatus for separating sulfur containing components from the bleed stream in the process plant according to present disclosure is of advantage in that sulfur recovery is increased by stripping the sulfur containing components using the stripping gas while routing the liquid stream comprising the methanol, HCN, and NH₃ to the vaporizer. A downstream sulfur processing unit, e. g. operating according to the Claus process, can thus operate more efficiently. Further, the apparatus routes the vaporized stream depleted with the sulfur containing components instead of directly routing the withdrawn bleed stream to a flare system. In such a way, sulfur contamination to the environment is avoided and safe disposal of the withdrawn bleed stream is enabled.

Optionally, the stripping gas is a fuel gas that is generated in the process plant. The stripping gas may be a hydrogen gas, a nitrogen gas, or methanol vapor. Optionally, the process plant is a Rectisol unit. The Rectisol unit may be a selective Rectisol unit or a nonselective Rectisol unit. Optionally, the solvent, washing agent or absorbent used is methanol.

Optionally, the vaporizer is further configured to provide the vaporized stream to at least one of a battery limit for further treatment, or a flare system, or a combustion system. The term "battery limit" refers to a border of the process plant. The routing of the vaporized stream to the flare system, or the battery limit for further treatment, or the combustion system instead of directly routing the bleed stream, enables safe disposal of the bleed stream.

Optionally, the hot regenerator overhead system comprises the reflux vessel, one or more heat exchangers, an acid gas separator, and a pump.

Optionally, the heat exchangers between a hot regenerator and the reflux vessel are configured to cool a first mixture comprising at least methanol vapors and the sulfur containing components received from a hot regenerator and condense out the methanol.

Optionally, the hot regenerator produces a regenerated methanol that is freed from the sulfur containing components and the first mixture by heating a laden methanol received in the hot regenerator. The regenerated methanol is discharged from the hot regenerator for later use in the absorption unit as an absorption medium.

Optionally, the reflux vessel is configured to (i) separate the methanol with sulfur containing components that is condensed in the heat exchangers from a gas stream received from the heat exchangers, (ii) provide the separated methanol to the hot regenerator, and (iii) provide a second mixture that comprises the stripped-out gas stream and the gas stream from the heat exchangers, to the other heat exchangers.

Optionally, the reflux vessel provides the separated methanol to the hot regenerator via the pump. The reflux vessel may collect different gas streams and liquid streams and separate them out by phase separation.

Optionally, the heat exchangers between the reflux vessel and the acid gas generator are configured to cool the second mixture comprising at least the methanol vapors, liquid methanol and the sulfur containing components received from the reflux vessel and condense out the methanol.

Optionally, the acid gas separator is configured to separate the methanol with sulfur containing components that is condensed in the heat exchangers from a gas stream received from the heat exchangers.

Optionally, the acid gas separator provides the separated gas stream mainly comprising the sulfur containing components as a top product to a sulfur recovery unit. The sulfur recovery unit may be a Claus plant. Optionally, the acid gas separator provides the separated methanol to the reflux vessel as a bottom product.

According to a second aspect, the present disclosure provides a method for separating sulfur containing components from a bleed stream in a process plant, wherein the method comprises:
providing the bleed stream comprising hydrogen cyanide (HCN), ammonia (NH₃), methanol, and sulfur containing components into a stripping column, wherein the bleed stream is received from a reflux vessel of a hot regenerator overhead system;
providing a stripping gas into the stripping column;
separating the sulfur containing components from the bleed stream by stripping the sulfur containing components when the stripping gas contacts the bleed stream, and forming a stripped-out gas stream and a liquid stream, wherein the stripped-out gas stream comprises the sulfur containing components and the stripping gas and the liquid stream comprises the methanol, HCN, and NH₃; and
providing the stripped-out gas stream to the reflux vessel for later sulfur recovery; and
providing the liquid stream as a bottom product to a vaporizer to vaporize the liquid stream.

The method for separating sulfur containing components from the bleed stream in the process plant according to present disclosure is of advantage in that sulfur recovery is increased by stripping the sulfur containing components using the stripping gas while routing the liquid stream comprising the methanol, HCN, and NH₃ to the vaporizer. A downstream sulfur processing unit, e. g. operating according to the Claus process, can thus operate more efficiently. Further, the method enables routing the vaporized stream depleted with the sulfur containing components instead of directly routing the withdrawn bleed stream to a flare system. In such a way, sulfur contamination to the environment is avoided and safe disposal of the withdrawn bleed stream is enabled.

Optionally, the stripping gas is a fuel gas that is generated in the process plant. The stripping gas may be a hydrogen gas, a nitrogen gas, or methanol vapor. Optionally, the process plant is a Rectisol unit. The Rectisol unit may be a selective Rectisol unit or a nonselective Rectisol unit.

Optionally, the method further comprises providing the vaporized stream to at least one of a battery limit for further treatment, or a flare system, or a combustion system. The "battery limit" refers to a border of the process plant. The method of routing the vaporized stream to the flare system, or the battery limit for further treatment, or the combustion system instead of directly routing the bleed stream, enables safe disposal of the bleed stream.

Optionally, the hot regenerator overhead system comprises the reflux vessel, one or more heat exchangers, an acid gas separator, and a pump.

Optionally, the method comprises cooling, using the heat exchangers, a first mixture comprising at least methanol vapors and the sulfur containing components that is received from a hot regenerator; and condensing out the methanol.

Optionally, the method includes producing, in the hot regenerator, a regenerated methanol that is freed from the sulfur containing components and the first mixture by heating a laden methanol received in the hot regenerator. The regenerated methanol is discharged from the hot regenerator for later use in the absorption unit as an absorption medium.

Optionally, the method comprises (i) separating, in the reflux vessel, the methanol with sulfur containing components that is condensed in the heat exchangers from a gas stream received from the heat exchangers, (ii) providing the separated methanol to the hot regenerator, and (iii) providing a second mixture that comprises the stripped-out gas stream and the gas stream from the heat exchangers, e. g. (106A, 106B), to the heat exchangers, e. g. (106C, 106D).

Optionally, the method includes providing the separated methanol from the reflux vessel, to the hot regenerator via the pump. The reflux vessel may collect different gas streams and liquid streams and separate them out by phase separation.

Optionally, the method comprises (i) cooling, using the heat exchangers, the second mixture comprising at least the methanol vapors, liquid methanol and the sulfur containing components that is received from the reflux vessel and condensing out the methanol, and (ii) separating, in the acid gas separator, the methanol with sulfur containing components that is condensed in the heat exchangers, e. g. (106C, 106D), from a gas stream received from the heat exchangers, e.g. (106C, 106D).

Optionally, the method includes providing the separated gas stream mainly comprising the sulfur containing components as a top product from the acid gas separator, to a sulfur recovery unit. The sulfur recovery unit may be a Claus plant. Optionally, method includes providing the separated methanol as a bottom product from the acid gas separator to the reflux vessel.

According to a third aspect, the present disclosure provides a use of the inventive apparatus or of the inventive a method for separating sulfur containing components from a bleed stream in a process plant,
wherein the process plant is a plant for cleaning a gas stream, preferably a crude synthesis gas stream comprising hydrogen (H₂) and carbon monoxide (CO), by absorption with a lean methanol stream as absorbent and wherein the process plant comprises an absorption section and a regeneration section,
wherein a clean synthesis gas stream and an absorbent stream laden with hydrogen cyanide (HCN), ammonia (NH₃), and sulfur containing components is obtained in the absorption section,
wherein at least a part of the absorbent stream laden with hydrogen cyanide (HCN), ammonia (NH₃), and sulfur containing components is routed to the regeneration section and is treated in a hot regenerator comprised in the regeneration section,
whereby a regenerated methanol stream is obtained from the hot regenerator which is at least partially recycled to the absorption section, forming at least a part of the lean methanol stream, and
whereby a hot regenerator overhead stream is obtained from the hot regenerator which comprises hydrogen cyanide (HCN), ammonia (NH₃), and sulfur containing components,
wherein the hot regenerator overhead stream is routed to a hot regenerator overhead system,
wherein the bleed stream is obtained within the hot regenerator overhead system.

The use of the apparatus or of the method for separating sulfur containing components from a bleed stream in a process plant according to present disclosure is of advantage in that sulfur recovery is increased by stripping the sulfur containing components using the stripping gas while routing the liquid stream comprising the methanol, HCN, and NH₃ to the vaporizer. A downstream sulfur processing unit, e. g. operating according to the Claus process, can thus operate more efficiently. Further, the method enables routing the vaporized stream depleted with the sulfur containing components instead of directly routing the withdrawn bleed stream to a flare system. In such a way, sulfur contamination to the environment is avoided and safe disposal of the withdrawn bleed stream is enabled.

A table below illustrates simulation results for a Rectisol unit integrated with the apparatus of the present disclosure and an existing solution are listed in the table below. The Rectisol unit includes 200 kilo normal cubic meters (kNm³)/hour (hr) capacity, and 56 barg inlet pressure. The sulfur content may be increased by stripping. Also, the electricity and refrigerant consumption may be reduced minimally.

| Utility | Existing Solution | Rectisol unit integrated with the apparatus of the present disclosure |
|---|---|---|
| Sulphur content in bleed methanol | 0.3 mole-% | 10 parts per million (ppm) |
| Electricity consumption | 100% | 99.4% |
| - only recompressor | 100% | 96% |
| Refrigeration consumption | 100% | 99.6% |
| - only medium pressure (MP) flash chiller | 100% | 99.6% |

Embodiments of the present disclosure substantially eliminate or at least partially address the aforementioned technical drawbacks in existing technologies by providing the apparatus and method for a designated use or application of the bleed stream withdrawn from the process plant.

### DETAILED DESCRIPTION OF THE DRAWINGS

**FIG. 1** is a schematic illustration of an apparatus **100** for separating sulfur containing components from a bleed stream in a process plant according to an embodiment of the present disclosure. The apparatus **100** includes a hot regenerator **102**, a hot regenerator overhead system, a stripping column **112**, and a vaporizer **114.** The hot regenerator overhead system includes a reflux vessel 104, one or more heat exchangers **106A-D**, an acid gas separator **108**, and a pump **110.** The stripping column **112** is configured to receive the bleed stream and a stripping gas. The bleed stream is received from the reflux vessel **104** of the hot regenerator overhead system. The bleed stream comprises methanol, hydrogen cyanide (HCN), ammonia (NH₃), and sulfur containing components. The stripping column **112** is configured to separate the sulfur containing components from the bleed stream by stripping the sulfur containing components when the stripping gas contacts with the bleed stream, and forming a stripped-out gas stream and a liquid stream. The stripped-out gas stream comprises the sulfur containing components and the stripping gas. The liquid stream comprises the methanol, HCN, and NH₃. Thereafter, the stripping column **112** provides the stripped-out gas stream to the reflux vessel **104** for later sulfur recovery. The vaporizer **114** is configured to receive the liquid stream as a bottom product from the stripping column **112** and vaporize the liquid stream to form a vaporized stream. The vaporizer **114** is further configured to provide the vaporized stream to at least one of a battery limit for further treatment, or a flare system, or a combustion system.

The hot regenerator **102** is configured to receive prewash methanol, also known as methanol laden with HCN, from an absorption unit (not shown). Optionally, the hot regenerator **102** is configured to receive the methanol laden with the sulfur containing components that includes hydrogen sulfide (H₂S), carbonyl sulfide (COS) or mercaptans, from a flash regeneration unit (not shown) after removing carbon dioxide (CO₂) from the methanol laden with the sulfur containing components and CO₂. In the hot regenerator **102**, the laden methanol is heated to produce a regenerated methanol that is freed from the sulfur containing components and HCN and a first mixture comprising at least methanol vapors and the sulfur containing components, as a top product. The hot regenerator **102** can be designed as a separation column, e. g. a distillation column. In an exemplary embodiment, the hot regenerator **102** can be designed as a distillation column with an upper an a lower separation zone separated by a collection tray, the collection tray being permeable for rising vapors but impermeable for down flowing liquids, wherein the collection tray serves to collect the regenerated methanol which may at least partially be recycled to the absorption unit (not shown).

The first mixture may also comprise HCN. The regenerated methanol is discharged from the hot regenerator **102** for later use in the absorption unit as an absorption medium. Methanol along with some water from the hot regenerator **102** is provided to a methanol-water (MeOH-H₂O) column as a bottom product.

The heat exchangers **106A** and **106B** are configured to cool the first mixture that is received from the hot regenerator **102** and condense out the methanol. The condensed methanol may comprise the sulfur containing components. The reflux vessel **104** is configured to (i) separate the condensed methanol with sulfur containing components that is received from the heat exchangers **106A** and **106B** from a gas stream received from the heat exchangers **106A** and **106B**, (ii) provide the separated methanol (e.g. liquid methanol) to the hot regenerator **102** via the pump **110**, and (iii) provide a second mixture that comprises the stripped-out gas stream and the gas stream from the heat exchangers **106A** and **106B**, to the heat exchangers **106C** and **106D.**

The heat exchangers **106C** and **106D** are configured to cool the second mixture comprising at least the methanol vapors, liquid methanol and the sulfur containing components that is received from the reflux vessel **104** and condense out the methanol. The acid gas separator **108** is configured to separate the methanol with sulfur containing components that is condensed in the heat exchangers **106C** and **106D** from a gas stream received from the heat exchangers **106C** and **106D.** The gas may comprise the sulfur containing components and some methanol vapors. Optionally, the acid gas separator **108** provides the separated methanol to the reflux vessel **104** as a bottom product. Optionally, the acid gas separator **108** provides the separated gas stream mainly comprising the sulfur containing components as a top product to a heat exchanger **106C** and subsequently to a sulfur recovery unit. The sulfur recovery unit may be a Claus plant. The heat exchanger **106C** may use the gas stream supplied from the acid gas generator **108** for cooling the second mixture.

Modifications to embodiments of the present disclosure described in the foregoing are possible without departing from the scope of the present disclosure as defined by the accompanying claims. Expressions such as "including", "comprising", "incorporating", "have", "is" used to describe, and claim the present disclosure are intended to be construed in a non-exclusive manner, namely allowing for items, components or elements not explicitly described also to be present. Reference to the singular is also to be construed to relate to the plural.

### LIST OF REFERENCE NUMERALS

- 100 -: apparatus
- 102 -: hot regenerator
- 104 -: reflux vessel
- 106A-D -: one or more heat exchangers
- 108 -: acid gas separator
- 110 -: pump
- 112 -: stripping column
- 114 -: vaporizer

## Claims

1. An apparatus (100) for separating sulfur containing components from a bleed stream in a process plant, wherein the apparatus (100) comprises:
a stripping column (112) that is configured to
receive the bleed stream and a stripping gas, wherein the bleed stream is received from a reflux vessel (104) of a hot regenerator (102) overhead system, wherein the bleed stream comprises methanol, hydrogen cyanide (HCN), ammonia (NH₃), and sulfur containing components;
separate the sulfur containing components from the bleed stream by stripping the sulfur containing components when the stripping gas contacts with the bleed stream, and forming a stripped-out gas stream and a liquid stream, wherein the stripped-out gas stream comprises the sulfur containing components and the stripping gas and the liquid stream comprises the methanol, HCN, and NH₃; and
provide the stripped-out gas stream to the reflux vessel (104) for later sulfur recovery; and
a vaporizer (114) that is configured to receive the liquid stream as a bottom product from the stripping column (112) and vaporize the liquid stream to form a vaporized stream.

2. The apparatus (100) according to claim 1, wherein the vaporizer (114) is further configured to provide the vaporized stream to at least one of a battery limit for further treatment, or a flare system, or a combustion system.

3. The apparatus (100) according to any one of the preceding claims, wherein the hot regenerator (102) overhead system comprises the reflux vessel (104), one or more heat exchangers (106A-D), an acid gas separator (108), and a pump (110).

4. The apparatus (100) according to claim 3, wherein the heat exchangers (106A, 106B) are configured to cool a first mixture comprising at least methanol vapors and the sulfur containing components received from a hot regenerator (102) and condense out the methanol.

5. The apparatus (100) according to any one of claims 3 to 4, wherein the reflux vessel (104) is configured to (i) separate the methanol with sulfur containing components that is condensed in the heat exchangers (106A, 106B) from a gas stream received from the heat exchangers (106A, 106B), (ii) provide the separated methanol to the hot regenerator (102), and (iii) provide a second mixture that comprises the stripped-out gas stream and the gas stream from the heat exchangers (106A, 106B), to the heat exchangers (106C, 106D).

6. The apparatus (100) according to any one of claims 3 to 5, wherein the heat exchangers (106C, 106D) are configured to cool the second mixture comprising at least the methanol vapors, liquid methanol and the sulfur containing components received from the reflux vessel (104) and condense out the methanol.

7. The apparatus (100) according to any one of claims 3 to 6, wherein the acid gas separator (108) is configured to separate the methanol with sulfur containing components that is condensed in the heat exchangers (106C, 106D) from a gas stream received from the heat exchangers (106C, 106D).

8. A method for separating sulfur containing components from a bleed stream in a process plant, wherein the method comprises:
providing the bleed stream comprising hydrogen cyanide (HCN), ammonia (NH₃), methanol, and sulfur containing components into a stripping column (112), wherein the bleed stream is received from a reflux vessel (104) of a hot regenerator (102) overhead system;
providing a stripping gas into the stripping column (112);
separating the sulfur containing components from the bleed stream by stripping the sulfur containing components when the stripping gas contacts the bleed stream, and forming a stripped-out gas stream and a liquid stream, wherein the stripped-out gas stream comprises the sulfur containing components and the stripping gas and the liquid stream comprises the methanol, HCN, and NH₃; and
providing the stripped-out gas stream to the reflux vessel (104) for later sulfur recovery; and
providing the liquid stream as a bottom product to a vaporizer (114) to vaporize the liquid stream.

9. The method according to claim 8, wherein the method further comprises providing the vaporized stream to at least one of a battery limit for further treatment, or a flare system, or a combustion system.

10. The method according to any one of the claims 8 to 9, wherein the hot regenerator (102) overhead system comprises the reflux vessel (104), one or more heat exchangers (106A-D), an acid gas separator (108), and a pump (110).

11. The method according to claim 10, wherein the method comprises cooling, using the heat exchangers (106A, 106B), a first mixture comprising at least methanol vapors and the sulfur containing components that is received from a hot regenerator (102); and condensing out the methanol.

12. The method according to any one of claims 10 to 11, wherein the method comprises (i) separating, in the reflux vessel (104), the methanol with sulfur containing components that is condensed in the heat exchangers (106A, 106B) from a gas stream received from the heat exchangers (106A, 106B), (ii) providing the separated methanol to the hot regenerator (102), and (iii) providing a second mixture that comprises the stripped-out gas stream and the gas stream from the heat exchangers (106A, 106B), to the heat exchangers (106C, 106D).

13. The method according to any one of claims 10 to 12, wherein the method comprises (i) cooling, using the heat exchangers (106C, 106D), the second mixture comprising at least the methanol vapors, liquid methanol and the sulfur containing components that is received from the reflux vessel (104) and condensing out the methanol, and (ii) separating, in the acid gas separator (108), the methanol with sulfur containing components that is condensed in the heat exchangers (106C, 106D) from a gas stream received from the heat exchangers (106C, 106D).

14. Use of an apparatus (100) according to any of claims 1 to 7 or use of a method according to any of claims 8 to 13 for separating sulfur containing components from a bleed stream in a process plant,
wherein the process plant is a plant for cleaning a gas stream, preferably a crude synthesis gas stream comprising hydrogen (H₂) and carbon monoxide (CO), by absorption with a lean methanol stream as absorbent and wherein the process plant comprises an absorption section and a regeneration section,
wherein a clean synthesis gas stream and an absorbent stream laden with hydrogen cyanide (HCN), ammonia (NH₃), and sulfur containing components is obtained in the absorption section,
wherein at least a part of the absorbent stream laden with hydrogen cyanide (HCN), ammonia (NH₃), and sulfur containing components is routed to the regeneration section and is treated in a hot regenerator (102) comprised in the regeneration section,
whereby a regenerated methanol stream is obtained from the hot regenerator (102) which is at least partially recycled to the absorption section, forming at least a part of the lean methanol stream, and
whereby a hot regenerator overhead stream is obtained from the hot regenerator (102) which comprises hydrogen cyanide (HCN), ammonia (NH₃), and sulfur containing components,
wherein the hot regenerator overhead stream is routed to a hot regenerator (102) overhead system,
wherein the bleed stream is obtained within the hot regenerator (102) overhead system.
